# EUROPÄISCHE PATENTANMELDUNG

(11) **EP 2 184 527 A2**
(43) Veröffentlichungstag der Anmeldung: **12.05.2010**
(21) Anmeldenummer: 09173950.8
(22) Anmeldetag: 23.10.2009
(51) Int. Cl.: F16L 55/165, F16L 55/18, B05C 7/04, B29C 63/00

(54) **Verfahren und Vorrichtung zum Tränken eines mit einer harzabsorbierbaren Schicht ausgestatteten Auskleidungsmoduls**

(30) Priorität: 05.11.2008 DE 102008055943
(71) Anmelder: Trelleborg Pipe Seals Duisburg GmbH, 47228 Duisburg (DE)
(72) Erfinder: Mühlin, Michael, 41812, Erkelenz (DE); Bichler, Andreas, 6341, Ebbs/Tirol (AT)
(74) Vertreter: Seidel, Marcus

(57) **Zusammenfassung**

Die Erfindung betrifft ein Verfahren und eine Vorrichtung zum Tränken eines mit einer harzabsorbierbaren Schicht (14, 104) ausgestatteten Auskleidungsmoduls (10, 100), welches bei der Sanierung einer Rohrleitung eingesetzt wird. Bei dem Verfahren wird wenigstens ein Endbereich des mit der harzabsorbierbaren Schicht (14, 104) und mit einer luftdichten, äußeren Beschichtung (16, 106) ausgestatteten Auskleidungsmoduls (10, 100) in eine luftdichte Hülle (20, 200) eingebracht und eine Einfüllhilfe (30) an einem Einfüllbereich des Auskleidungsmoduls (10, 100) befestigt. Die Übergänge zwischen dem Auskleidungsmodul (10, 100) und der Hülle (20, 200) und zwischen dem Einfüllbereich und der Einfüllhilfe (30) werden mittels wenigstens eines Abdichtmittels (50) luftdicht abgeschlossen. Die Einfüllhilfe (30) wird gegenüber der Außenumgebung mit einem lösbaren Absperrmittel (40) derart luftdicht abgeschlossen, dass die durch die Hülle (20, 200) und die Einfüllhilfe (30) und wahlweise auch das Auskleidungsmodul (10, 100) begrenzte Kammer (26) luftdicht abgeschlossen ist und eine von der Außenumgebung zugängliche Einfüllkammer (36) zur Auffüllung mit Harz (60) bereitgestellt wird. Aus der Kammer (26) wird Luft derart abgesaugt, dass in der Kammer (26) ein erster Druckwert vorhanden ist. Ferner wird in die Einfüllkammer (36), in der ein von dem ersten Druckwert unterschiedlicher zweiter Druckwert vorhanden ist, Harz (60) eingefüllt. Das Absperrmittel (40) wird gelöst, so dass das Harz (60) unter Zuhilfenahme des Druckunterschiedes zwischen erstem und zweitem Druckwert und wahlweise zusätzlich der Schwerkraft von der Einfüllkammer (36) in die Kammer (26) eingebracht und die harzabsorbierbare Schicht (14, 104) des Auskleidungsmoduls (10, 100) mit dem Harz (60) getränkt wird.

## Beschreibung

Die vorliegende Erfindung betrifft ein Verfahren und eine Vorrichtung zum Tränken eines mit einer harzabsorbierbaren Schicht ausgestatteten Auskleidungsmoduls, welches bei der Sanierung einer Rohrleitung eingesetzt wird.

Aus dem Stand der Technik sind vielfältige Methoden zur Tränkung eines solchen Auskleidungsmoduls für eine Rohrleitung bekannt. So offenbart die US 4,009,063 ein Verfahren zur Einleitung eines Harzes über zwei Düsen in einen rohrförmigen Schlauch. Das einzufüllende Harz wird über einen Behälter und Pumpen zugeführt.

Die DE 101 48 258 A1 beschreibt ein Imprägniersystem zum Tränken eines Moduls mit Harz, wobei das Modul in einen Imprägniertrichter eingeführt und aus einem Formstück, das das Modul umschließt, herausgezogen wird, wobei Harz unter Druck auf das Modul gepresst wird, so dass der Gewebestreifen des Moduls vollständig mit Harz getränkt wird. Das Harz kann beispielsweise mittels einer Injektionsdüse gezielt auf das Modul gepresst werden.

Ferner beschreibt die US 5,915,419 A ein Verfahren zur Imprägnierung eines hutförmigen Abdichtungsmoduls mit Harz. Zunächst wird das Modul in einen Behälter eingebracht, in dem sich Harz befindet. Der Behälter ist vorzugsweise aus einem durchsichtigen Material. Im Bereich einer Öffnung des Behälters wird ein Vakuumschlauch eingeführt und luftdicht verschlossen. Der Schlauch ist mit einer Vakuumpumpe verbunden, um innerhalb des Behälters ein Vakuum zu erzeugen. Dies führt dazu, dass das Harz nach oben gezogen wird und dadurch das Modul mit dem Harz getränkt werden. Anschließend wird der Vakuumschlauch entfernt und der Behälter abgedichtet. Dann wird der so verschlossene Behälter in einen zweiten Behälter eingebracht und mit einer weiteren Abdichtung verschlossen. Der zweite Behälter ist aus einem lichtundurchlässigen Material, um ein vorzeitiges Aushärten des Harzes zu verhindern.

Schließlich betrifft die US 4,366,012 ein Verfahren zum Imprägnieren einer Schicht aus harzabsorbierendem Material mit einem aushärtbaren Harz. Das Harz kann über eine Düse in das Innere des Auskleidungsrohres eingebracht werden. Dann wird der Auslass verschlossen und ein Vakuum aufgebracht, so dass sich der Auskleidungsschlauch zusammenzieht. Anschließend wird über einen Schlauch eine Vakuumquelle an das Ende des Auskleidungsschlauchs angeschlossen und die Luft aus dem Inneren des Auskleidungsschlauchs abgesaugt. Infolge der Luftabsaugung wird das Harz in dem Filzmaterial des Auskleidungsschlauchs verteilt, wodurch die gewünschte Imprägnierung erreicht wird.

Es hat sich als nachteilig herausgestellt, dass bei den oben genannten herkömmlichen Verfahren das Harz entweder auf aufwändige Weise in das Innere des zu imprägnierenden Auskleidungsmoduls eingebracht werden muss oder das Harz in eine Hülle eingefüllt wird, anschließend das Auskleidungsmodul vollständig in die Hülle eingebracht und schließlich ein Vakuum aufgebracht wird, wobei ein relativ hoher Druckunterschied zur Außenumgebung hergestellt werden muss.

Der Erfindung liegt die **Aufgabe** zugrunde, ein Verfahren und eine Vorrichtung zum Tränken eines mit einer harzabsorbierbaren Schicht ausgestatteten Auskleidungsmoduls zu schaffen, wobei das Tränken mit einfachen Mitteln unter möglichst geringem Aufwand und vor Ort möglich ist.

Zur Lösung dieser Aufgabe wird ein Verfahren gemäß Anspruch 1 und eine Vorrichtung gemäß Anspruch 10 vorgeschlagen.

Das erfindungsgemäße Verfahren zum Tränken eines mit einer harzabsorbierbaren Schicht ausgestatteten Auskleidungsmoduls, welches bei der Sanierung einer Rohrleitung eingesetzt wird, umfasst folgende Schritte:
- Einbringen wenigstens eines Endbereiches des mit der harzabsorbierbaren Schicht und mit einer luftdichten, äußeren Beschichtung ausgestatteten Auskleidungsmoduls in eine luftdichte Hülle;
- Befestigen einer Einfüllhilfe an einem Einfüllbereich des Auskleidungsmoduls;
- luftdichtes Abschließen der Übergänge zwischen dem Auskleidungsmodul und der Hülle und zwischen dem Einfüllbereich und der Einfüllhilfe mittels wenigstens eines Abdichtmittels;
- luftdichtes Abschließen der Einfüllhilfe gegenüber der Außenumgebung mit einem lösbaren Absperrmittel derart, dass die durch die Hülle und die Einfüllhilfe und wahlweise auch das Auskleidungsmodul begrenzte Kammer luftdicht abgeschlossen ist und dass eine von der Außenumgebung zugängliche Einfüllkammer zur Auffüllung mit Harz bereitgestellt wird;
- Absaugen von Luft aus der Kammer derart, dass ein erster Druckwert in der Kammer vorhanden ist;
- Einfüllen des Harzes in die Einfüllkammer, in der ein von dem ersten Druckwert unterschiedlicher zweiter Druckwert vorhanden ist;
- Lösen des Absperrmittels, so dass das Harz unter Zuhilfenahme des Druckunterschiedes zwischen erstem und zweitem Druckwert und wahlweise zusätzlich der Schwerkraft von der Einfüllkammer in die Kammer eingebracht wird und die harzabsorbierbare Schicht des Auskleidungsmoduls mit dem Harz getränkt wird.

Das erfindungsgemäße Verfahren ermöglicht ein einfaches Tränken des zur Verwendung bei einer Sanierung einer Rohrleitung vorgesehenen Auskleidungsmoduls mit wenigen Hilfsmitteln, so dass das Verfahren ohne aufwändige Apparaturen vor Ort durchgeführt werden kann. So werden nur eine Hülle, eine Einfüllhilfe, Abdichtmittel und Absperrmittel benötigt, um das Auskleidungsmodul mit dem Harz zu imprägnieren. Diese Bestandteile stellen einen Bausatz dar, der platzsparend in einer Verpackung zusammengestellt sein kann. Von besonderem Vorteil ist ferner, dass das Harz in eine Einfüllkammer in einem Bereich außerhalb des evakuierten Bereichs eingebracht und anschließend der Übergang zu der evakuierten Kammer, gebildet durch Hülle, Auskleidungsmodul und Einfüllhilfe geöffnet werden kann und durch den Druckunterschied und wahlweise zusätzlich durch die Schwerkraft das Harz in die Kammer eingesogen wird und in die Poren der harzabsorbierenden Schicht eindringen kann. Im Unterschied zum Stand der Technik reicht ein relativ geringes Vakuum aus, da es nicht erforderlich ist, das Harz mittels des Vakuums entgegen der Schwerkraft in der harzabsorbierbaren Schicht nach oben zu befördern.

Vorteilhafte Weiterbildungen des erfindungsgemäßen Verfahrens sind in den Ansprüchen 2 bis 9 beschrieben.

Bei einer bevorzugten Weiterbildung des Verfahrens bildet eine Krempe oder ein erstes Rohrende des Auskleidungsmoduls den ersten Endbereich und/oder eine Manschette oder ein zweites Rohrende des Auskleidungsmoduls den Einfüllbereich. So kann bei einem eine Krempe und eine Manschette umfassenden Auskleidungsmodul die Krempe über eine Öffnung in der Hülle in die Hülle eingebracht werden. Hierbei kann lediglich die Krempe in die Hülle eingebracht werden. Anders ausgedrückt muss die Manschette nicht in die Hülle eingebracht werden. Hierbei ist es von Vorteil, wenn zumindest die Manschette mit einer luftundurchlässigen Außenschicht versehen ist. Für den Fall, dass ein erstes Rohrende den ersten Endbereich und ein zweites Rohrende den Einfüllbereich bilden, weist das Auskleidungsmodul vorzugsweise eine T-Form zur Verwendung bei einem Seitenanschluss an eine Hauptleitung auf.

Bei einer bevorzugten Weiterbildung des Verfahrens umfasst das Befestigen der Einfüllhilfe an dem Einfüllbereich des Auskleidungsmoduls ein Einführen der Einfüllhilfe in den Einfüllbereich. Als Einfüllhilfe wird vorteilhafterweise ein Einfüllstutzen, insbesondere in Form eines Hohlkörpers, verwendet. Die Einfüllhilfe und/oder die Hülle können beispielsweise aus einer Kunststofffolie gebildet sein. Auf diese Weise lassen sich Hülle und Einfüllhilfe in einer flachen Form verpacken.

Als Abdichtmittel wird vorzugsweise Klebeband und/oder als Absperrmittel wenigstens eine Klammer verwendet. Diese Mittel sind derart ausgebildet und/oder anbringbar, dass ein luftdichtes Abschließen erreicht werden kann.

Zur Bildung der Einfüllkammer werden die Einfüllhilfe und das Absperrmittel eingesetzt. Das Absperrmittel kann mehrere Teile umfassen, beispielsweise zwei oder mehr Klammern. Vorzugsweise werden ein Einfüllstutzen als Einfüllhilfe und zwei Klammern als Absperrmittel verwendet. Hierbei wird der Einfüllstutzen in das von der Krempe abgewandte Ende der Manschette teilweise eingeführt, so dass ein Abschnitt des Einfüllstutzens aus der Manschette heraussteht. Dieser herausstehende Abschnitt sollte ausreichend Platz für das einzufüllende Harz zur Verfügung stellen können. Nun wird eine erste Klammer im Bereich des freien Endes der Manschette angebracht, so dass das freie Ende und der Einfüllstutzen derart dicht abgeklemmt sind, dasss im nächsten Schritt das Harz über den oben offenen Einfüllstutzen eingefüllt werden kann. Anschließend wird eine zweite Klammer im Bereich des oberen Endes des Einfüllstutzens zum Abklemmen des Einfüllstutzens und luftdichten Abschließen der Einfüllkammer angebracht. Anschließend kann die erste Klammer entfernt werden, wodurch die Einfüllkammer unten geöffnet, das Harz in die Kammer eingebracht und die harzabsorbierbare Schicht mit dem Harz getränkt werden kann.

Bei einer bevorzugten Weiterbildung erfolgt das Absaugen von Luft über ein Ventil in der Hülle. Vorzugsweise kann ein Schutzelement zum Schutz des Ventils vor dem Harz innerhalb der Hülle im Bereich des Ventils vorgesehen werden. Vorteilhafterweise wird das Schutzelement vor dem Einbringen des Auskleidungsmoduls in die Hülle im Bereich des Ventils positioniert. Auf diese Weise kann beim Tränken ein Verkleben oder Verstopfen des Ventils mit Harz verhindert werden. Als Schutzelement kann ein Streifen aus Gewebe, insbesondere aus Filz, im Bereich der Ventilöffnung verwendet werden.

Beim Absaugen der Luft aus der Kammer ist es von Vorteil, wenn der erste Druckwert ein Unterdruck ist. Vorteilhafterweise handelt es sich bei dem zweiten Druckwert um den Druck der Außenumgebung. Um das Absaugen der Luft und somit das Vakuum erzielen zu können, ist die Hülle vorzugsweise mit einem verschließbaren Ventil ausgestattet.

Die erfindungsgemäße Vorrichtung zur Durchführung des erfindungsgemäßen Verfahrens zum Tränken eines Auskleidungsmoduls ist durch einen Bausatz gekennzeichnet, der eine Hülle, eine Einfüllhilfe, ein Abdichtmittel und ein Absperrmittel umfasst. Vorzugsweise besteht der Bausatz abschließend aus Hülle, Einfüllhilfe, Abdichtmittel und Absperrmittel.

Mit dem nur wenige Hilfsmitteln enthaltenden Bausatz kann auf einfache Weise ein Auskleidungsmodul mit Harz getränkt werden. Als vorteilhaft hat sich insbesondere herausgestellt, dass dieser Bausatz platzsparend zusammengestellt und als Set verpackt werden kann und somit gut vor Ort eingesetzt werden kann.

Bei einer bevorzugten Ausführungsform umfasst die Hülle eine Öffnung zum Einbringen wenigstens eines Abschnitts des Auskleidungsmoduls in die Hülle. Es ist also nicht zwingend erforderlich, das Auskleidungsmodul vollständig in die Hülle einzubringen. Beispielsweise reicht es für den Fall, dass das Auskleidungsmodul außen mit einer luftdichten Schicht versehen ist, aus, das Auskleidungsmodul nur im Bereich der Krempe in die Hülle einzubringen. Gleichermaßen kann es bei einem T-förmigen Auskleidungsmodul ausreichen, lediglich zwei rohrförmige Enden mit der Hülle abzudecken und das dritte rohrförmige Ende mit der Einfüllhilfe zu versehen.

Um ein einfaches Absaugen von Luft aus der Kammer zu ermöglichen, weist die Hülle ein Ventil, insbesondere ein verschließbares Ventil auf. Weiterhin kann die Einfüllhilfe einen Einfüllstutzen, insbesondere in Form eines Hohlkörpers, umfassen. Das Abdichtmittel umfasst vorteilhafterweise ein Klebeband und/oder das Absperrmittel wenigstens eine Klammer. Insbesondere umfasst das Absperrmittel einen Satz von zwei oder mehr Klammern.

Nachfolgend werden das erfindungsgemäße Verfahren und die erfindungsgemäße Vorrichtung anhand der beiliegenden Zeichnungen näher erläutert. Dabei zeigen schematisch:
- Fig. 1: eine perspektivische Ansicht eines ersten Auskleidungsmoduls;
- Fig. 2: einen Querschnitt durch das Auskleidungsmodul gemäß Fig. 1;
- Fig. 3: eine perspektivische Ansicht durch das Auskleidungsmodul gemäß Figuren 1 und 2, das teilweise in eine Hülle eingebracht und mit einer Einfüllhilfe versehen ist;
- Fig. 4: einen Querschnitt durch das Auskleidungsmodul gemäß Figur 3;
- Fig. 5: einen Querschnitt durch das Auskleidungsmodul gemäß Figuren 1 und 2, das vollständig in eine Hülle eingebracht und mit einer Einfüllhilfe versehen ist, und
- Fig. 6: einen Querschnitt durch ein zweites, T-förmiges Auskleidungsmodul, das teilweise in eine zweite Hülle eingebracht und mit einer zweiten Einfüllhilfe versehen ist.

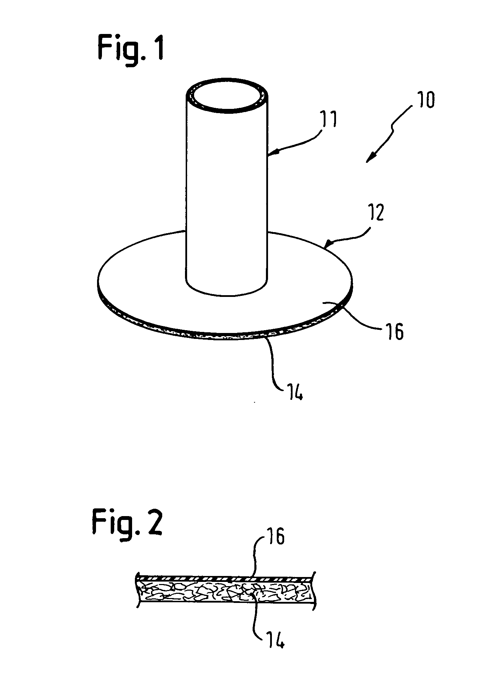

In Fig. 1 ist in einer perspektivischen Ansicht eine erste Ausführungsform eines Auskleidungsmoduls 10 gezeigt. Das Auskleidungsmodul 10 wird auch als Hut bezeichnet und wird als Einsatz im Bereich eines Anschlusses einer Nebenleitung an eine Hauptleitung zur Sanierung von Undichtigkeiten von Rohleitungen verwendet.

Ein erster Endbereich des Auskleidungsmoduls 10 wird durch eine Krempe 12 und ein zweiter Endbereich des Auskleidungsmoduls 10 wird durch eine Manschette 11 gebildet. Fig. 2 zeigt den Schichtaufbau des Auskleidungsmoduls 10, wonach eine harzabsorbierbare innere Schicht 14, beispielsweise aus einem Glasfasergewebe, und eine äußere Schicht 16 vorgesehen sind. Die äußere Schicht 16 ist luftundurchlässig, besteht aus PU oder PVC und ist beispielsweise mittels Kalandrieren auf der harzabsorbierenden Schicht 14 aufgebracht.

Um das Auskleidungsmodul 10 später an der vorgesehenen Stelle mit der Innenwandung des Hauptrohres und/oder des Nebenrohres verkleben zu können, wird die harzabsorbierbare Schicht 14 mit Hilfe des unten dargestellten Verfahrens mit Harz getränkt. Nach Einbringen des Auskleidungsmoduls 10 in die Rohrleitung härtet das Harz aus und es wird eine feste Verbindung zwischen Auskleidungsmodul 10 und der inneren Wandung des Rohres erreicht.

Zur Durchführung des erfindungsgemäßen Verfahrens zum Tränken des Auskleidungsmoduls 10 ist eine Vorrichtung nach Art eines Bausatzes vorgesehen, die aus einer Hülle 20, einer Einfüllhilfe 30, einem Abdichtmittel 50 und einem Absperrmittel 40 besteht.

Beim vorliegenden Ausführungsbeispiel besteht die Hülle 20 aus einer Kunststofffolie, die bis auf eine Öffnung 22 geschlossen ausgebildet ist. Die Öffnung 22 ist mit einer Umrandung 24 versehen. Die Hülle 20 umfasst ferner ein verschließbares Ventil 28.

Die Einfüllhilfe 30 wird durch einen rohrartigen Kunststofffolienkörper gebildet, der ein erstes Ende 32 und ein zweites Ende 34 aufweist. Das Absperrmittel 40 umfasst eine erste Klammer 42 und eine zweite Klammer 44. Das Abdichtmittel 50 besteht aus einem Klebeband. Weiterhin wird zur Durchführung des Verfahrens eine ausreichende Menge an Harz 60 benötigt, wobei das Harz 60 nicht Bestandteil des Bausatzes sein muss.

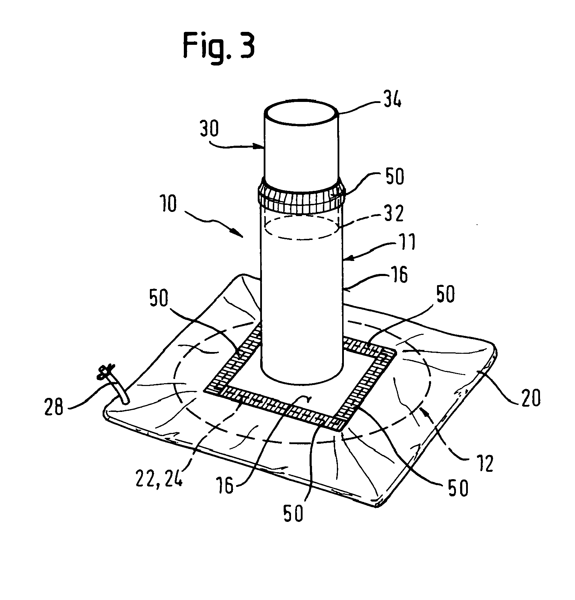

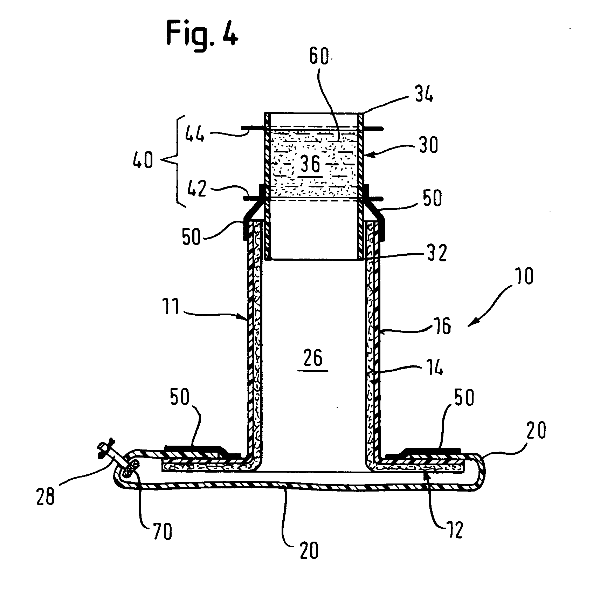

Nachfolgend wird nun anhand der Figuren 3 und 4 eine erste bevorzugte Variante des erfindungsgemäßen Verfahrens zum Tränken des mit der harzabsorbierbaren Schicht 14 ausgestatteten Auskleidungsmoduls 10 beschrieben. Zunächst wird die Krempe 12 als der erste Endbereich über die Öffnung 22 in die aus einer luftdichten Kunststofffolie bestehende Hülle 20 eingeführt, so dass sich die Krempe 12 vollständig innerhalb der Hülle 20 befindet, aber die Manschette 11 aus der Öffnung 22 nach oben herausragt. So dann wird der Übergang zwischen der Hülle 20 und der Krempe 12 im Bereich der Umrandung 24 luftdicht abgeschlossen, indem als Abdichtmittel 50 ein Klebeband entlang der Umrandung 24 aufgebracht wird, so dass eine luftdichte, feste Verbindung der äußeren Schicht 16 im Bereich der Krempe mit der Hülle 20 entsteht. Wahlweise kann das Klebeband auch im Bereich der Manschette 11 mit der äußeren Schicht 16 verbunden werden.

Als nächstes wird die Einfüllhilfe 30 teilweise in die Manschette 11 eingeführt, so dass ein erstes Ende 32 der Einfüllhilfe 30 in die Manschette 11 hineinragt. Ein zweites Ende 34 der Einfüllhilfe 30 bildet ein oberes freies Ende. Anschließend wird die Einfüllhilfe 30 an der Manschette 11 befestigt. Diese Befestigung der Einfüllhilfe 30 an dem oberen Ende der Manschette 11 als dem späteren Einfüllbereich für das Harz erfolgt durch ein Klebeband als Abdichtmittel 50. Dieses Klebeband wird im Bereich des Überganges von oberem Ende der Manschette 11 zu der Einfüllhilfe 30 auf der Außenseite der Einfüllhilfe 30 und der äußeren Schicht 16 aufgeklebt, so dass ein luftdichter Abschluss des Überganges erreicht wird.

Im nächsten Schritt wird die nur schematisch angedeutete erste Klammer 42 des Absperrmittels 40 in einem Bereich oberhalb des oberen Endes der Manschette 11 an der Einfüllhilfe 30 derart angebracht, dass eine Kammer 26, die durch die Hülle 20, das Auskleidungsmodul 10, die Einfüllhilfe 30 und die erste Klammer 42 begrenzt ist, luftdicht abgeschlossen wird. Im Bereich der Manschette 11 sorgt die luftdichte äußere Schicht 16 für einen luftdichten Abschluss nach außen.

Nun wird mittels des Ventils 28 die in der Kammer 26 enthaltene Luft abgesaugt, so dass in der Kammer 26 ein erster Druckwert vorhanden ist. Ziel dieser Absaugung von Luft ist es auch, dass möglichst wenig Luft in den Kapillaren der aus Glasfasergewebe bestehenden harzabsorbierbaren Schicht 14 verbleibt und ein Vakuum entsteht. Nach Absaugen der Luft wird das Ventil 28 geschlossen.

Anschließend wird das Harz 60 über das obere, offene Ende der Einfüllhilfe 30 in die eine Einfüllkammer 36 bereitstellende Einfüllhilfe 30 eingefüllt. Nach Abschluss des Einfüllvorganges wird im Bereich des oberen freien Endes 34 der Einfüllhilfe 30 eine zweite Klammer 44 angebracht. In der Einfüllkammer 36 herrscht ein von dem ersten Druckwert unterschiedlicher zweiter Druckwert. Im vorliegenden Beispiel entspricht der zweite Druckwert dem Druck der Außenumgebung. Dieser Zustand ist in Fig. 4 gezeigt.

Anschließend wird die erste Klammer 42 gelöst, und das Harz 60 wird unter Zuhilfenahme des Druckunterschiedes zwischen erstem und zweitem Druckwert und zusätzlich der Schwerkraft von der Einfüllkammer 36 in die Kammer 26 eingebracht, wobei die harzabsorbierbare Schicht 14 mit dem Harz 60 getränkt wird. Infolge des in der Kammer 26 herrschenden Vakuums wird das Harz 60 tief in die Kapillaren des Glasfasergewebes der harzabsorbierbaren Schicht 14 eingesogen. Um den Druckunterschied zwischen der Einfüllkammer 36 und der Kammer 26 möglichst gut ausnützen zu können, bleibt die zweite Klammer 44 bei diesem Verfahrensschritt geschlossen.

Um das Absaugen der Luft über das Ventil 28 zu gewährleisten, kann innerhalb der Hülle 20 im Bereich des Ventils 28 ein Schutzelement 70 vorgesehen werden (siehe Fig. 4 bis 6). Vorteilhafterweise wird das Schutzelement 70 vor dem Einbringen des Auskleidungsmoduls 10 in die Hülle 20 im Bereich des Ventils 28 positioniert. Auf diese Weise kann beim Tränken ein Verkleben oder Verstopfen des Ventils 28 mit Harz verhindert werden. Als Schutzelement 70 kann ein Streifen aus Gewebe, insbesondere aus Filz, im Bereich der Ventilöffnung vorgesehen werden.

Nachdem das Harz in die harzabsorbierbare Schicht 14 aufgenommen worden ist, werden die Klebebänder und die Einfüllhilfe 30 entfernt und das Auskleidungsmodul 10 aus der Hülle 20 herausgenommen. Bevor das nun mit dem Harz 60 getränkte Auskleidungsmodul 10 in die zu sanierende Rohrleitung eingebracht wird, wird es umgedreht, so dass sich die mit Harz getränkte Schicht 14 auf der Außenseite befindet.

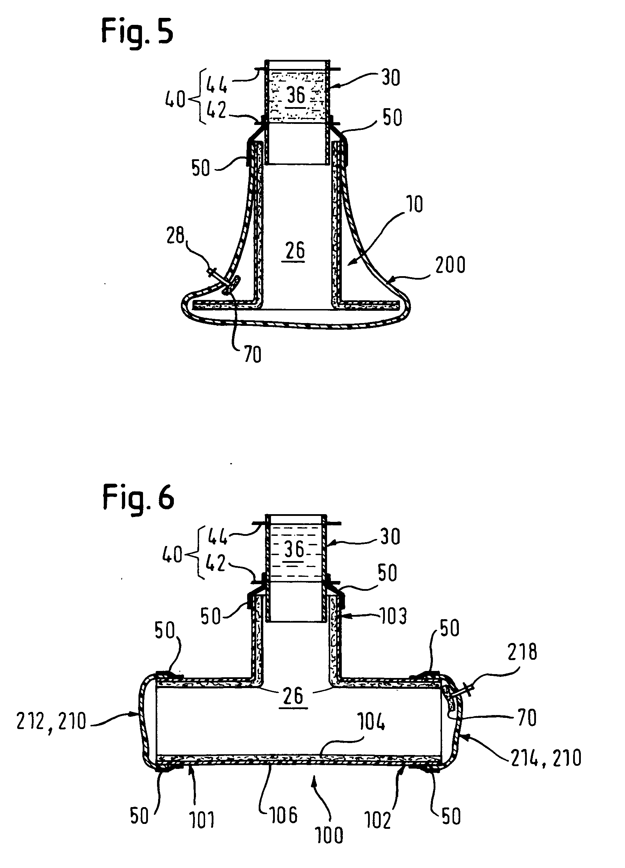

Fig. 5 zeigt ein weiteres Ausführungsbeispiel, bei dem das Auskleidungsmodul 10, die Einfüllhilfe 30, das Absperrmittel 40 und das Abdichtmittel 50 gemäß den Figuren 1 und 2, jedoch eine unterschiedliche Hülle 200 eingesetzt wird. So weist die Hülle 200 eine größere Oberfläche bzw. ein größeres Volumen auf und hat eine Größe, so dass das Auskleidungsmodul 10 vollständig oder zu großen Teilen in die Hülle 200 eingebracht werden kann. Fig. 5 zeigt bereits einen Zustand, bei dem das Auskleidungsmodul 10 in die Hülle 200 eingebracht und der Übergang zwischen Hülle 200 und Einfüllhilfe 30 mit einem Klebeband als Abdichtmittel 50 luftdicht abgeschlossen ist. Die restlichen Bestandteile und die zugehörigen Verfahrensschritte ergeben sich aus obigen Ausführungen zu den Figuren 1 bis 4.

Fig. 6 zeigt ein weiteres Ausführungsbeispiel mit einem Auskleidungsmodul 100, das ein erstes Rohrende 101 und ein zweites Rohrende 102 und ein drittes Rohrende 103 umfasst. Das Auskleidungsmodul 100 weist einen schichtweisen Aufbau entsprechend Fig. 2 mit einer harzabsorbierbaren Schicht 104 und einer äußeren Schicht 106 auf. Im Unterschied zu den Figuren 1 bis 5, weist die in Fig. 6 eingesetzte Hülle 210 einen ersten Abschnitt 212 und einen zweiten Abschnitt 214 auf. Der erste Abschnitt 212 wird zum luftdichten Abschließen des ersten Rohrendes 101 verwendet. Hierzu wird nach teilweisem Einbringen des ersten Rohrendes 101 in den Hüllenabschnitt 212 ein Klebeband als Abdichtmittel 50 im Übergangsbereich aufgebracht. Weiterhin wird der zweite Hüllenabschnitt 214 im Bereich des zweiten Rohrendes 102 aufgebracht und mittels eines Klebebands luftdicht mit der äußeren Schicht 106 des zweiten Rohrendes 102 verklebt. Der zweite Hüllenabschnitt 214 umfasst das entsprechende Ventil 218 zum späteren Absaugen von Luft. Die Einfüllhilfe 30 wird in das obere Ende des dritten Rohrendes 103 teilweise eingeführt und mittels eines Klebebands luftdicht an der äußeren Schicht 106 des dritten Rohrendes 103 befestigt. Die übrigen Bestandteile des in Fig. 6 gezeigten Ausführungsbeispiels entsprechen den Bestandteilen des Ausführungsbeispiels gemäß den Figuren 1 bis 4.

Nach Befestigung von Hülle 210 und Einfüllhilfe 30 an dem Auskleidungsmodul 100 wird in analoger Weise wie oben zu den Figuren 3 und 4 erläutert, die erste Klammer 42 angebracht, das Harz 60 in die Einfüllkammer 36 eingefüllt und die zweite Klammer 44 am oberen Ende der Einfüllhilfe 30 angebracht. Nachdem mittels der Absaugung von Luft über das Ventil 218 ein Vakuum in der Kammer 26 erzeugt worden ist, wird die erste Klammer 42 gelöst. Nun kann das Harz 60 in die Kammer 26 einlaufen und die harzabsorbierbare Schicht 14 tränken.

Bei allen oben erläuterten Ausführungsformen kann alternativ zu dem kombinierten Einsatz von Druckunterschied zwischen erstem und zweitem Druckwert und Schwerkraft, eine Variante gewählt werden, bei der lediglich der Druckunterschied, aber nicht zusätzlich die Schwerkraft verwendet wird, um die harzabsorbierbare Schicht 14 mit dem Harz 60 zu tränken.

### Bezugszeichenliste

- 10: Auskleidungsmodul
- 11: Manschette
- 12: Krempe
- 14: harzabsorbierbare Schicht
- 16: äußere Schicht

- 20: Hülle
- 22: Öffnung
- 24: Umrandung
- 26: Kammer
- 28: Ventil

- 30: Einfüllhilfe
- 32: erstes Ende
- 34: zweites Ende
- 36: Einfüllkammer

- 40: Absperrmittel
- 42: erste Klammer
- 44: zweite Klammer

- 50: Abdichtmittel

- 60: Harz

- 70: Schutzelement

- 100: Auskleidungsmodul
- 101: erstes Rohrende
- 102: zweites Rohrende
- 103: drittes Rohrende
- 104: harzabsorbierbare Schicht
- 106: äußere Schicht

- 200: Hülle

- 210: Hülle
- 212: erster Hüllenabschnitt
- 214: zweiter Hüllenabschnitt
- 218: Ventil

## Patentansprüche

1. Verfahren zum Tränken eines mit einer harzabsorbierbaren Schicht (14, 104) ausgestatteten Auskleidungsmoduls (10, 100), welches bei der Sanierung einer Rohrleitung eingesetzt wird, wobei das Verfahren folgende Schritte umfasst:
- Einbringen wenigstens eines Endbereiches des mit der harzabsorbierbaren Schicht (14, 104) und mit einer luftdichten, äußeren Beschichtung (16, 106) ausgestatteten Auskleidungsmoduls (10, 100) in eine luftdichte Hülle (20, 200);
- Befestigen einer Einfüllhilfe (30) an einem Einfüllbereich des Auskleidungsmoduls (10, 100);
- luftdichtes Abschließen der Übergänge zwischen dem Auskleidungsmodul (10, 100) und der Hülle (20, 200) und zwischen dem Einfüllbereich und der Einfüllhilfe (30) mittels wenigstens eines Abdichtmittels (50);
- luftdichtes Abschließen der Einfüllhilfe (30) gegenüber der Außenumgebung mit einem lösbaren Absperrmittel (40) derart, dass die durch die Hülle (20, 200) und die Einfüllhilfe (30) und wahlweise auch das Auskleidungsmodul (10, 100) begrenzte Kammer (26) luftdicht abgeschlossen ist und dass eine von der Außenumgebung zugängliche Einfüllkammer (36) zur Auffüllung mit Harz (60) bereitgestellt wird;
- Absaugen von Luft aus der Kammer (26) derart, dass ein erster Druckwert in der Kammer (26) vorhanden ist;
- Einfüllen des Harzes (60) in die Einfüllkammer (36), in der ein von dem ersten Druckwert unterschiedlicher zweiter Druckwert vorhanden ist;
- Lösen des Absperrmittels (40), so dass das Harz (60) unter Zuhilfenahme des Druckunterschiedes zwischen erstem und zweitem Druckwert und wahlweise zusätzlich der Schwerkraft von der Einfüllkammer (36) in die Kammer (26) eingebracht wird und die harzabsorbierbare Schicht (14, 104) des Auskleidungsmoduls (10, 100) mit dem Harz (60) getränkt wird.

2. Verfahren nach Anspruch 1, **dadurch gekennzeichnet, dass** eine Krempe (12) oder ein erstes Rohrende des Auskleidungsmoduls (10, 100) den ersten Endbereich und/oder eine Manschette (11) oder ein zweites Rohrende des Auskleidungsmoduls (10, 100) den Einfüllbereich bildet.

3. Verfahren nach Anspruch 1 oder 2, **dadurch gekennzeichnet, dass** das Befestigen der Einfüllhilfe (30) an dem Einfüllbereich des Auskleidungsmoduls (10, 100) ein Einführen der Einfüllhilfe (30) in den Einfüllbereich umfasst.

4. Verfahren nach einem der vorhergehenden Ansprüche, **dadurch gekennzeichnet, dass** als Einfüllhilfe (30) ein Einfüllstutzen, insbesondere in Form eines Hohlkörpers, verwendet wird.

5. Verfahren nach einem der vorhergehenden Ansprüche, **dadurch gekennzeichnet, dass** als Abdichtmittel (50) Klebeband und/oder als Absperrmittel (40) wenigstens eine Klammer (42, 44) verwendet wird.

6. Verfahren nach einem der vorhergehenden Ansprüche, **dadurch gekennzeichnet, dass** die Einfüllkammer (36) durch die Einfüllhilfe (30) und das Absperrmittel (40) gebildet wird.

7. Verfahren nach einem der vorhergehenden Ansprüche, **dadurch gekennzeichnet, dass** das Absaugen von Luft über ein Ventil (28) in der Hülle (20) erfolgt und ein Schutzelement (70) zum Schutz des Ventils (28) vor dem Harz innerhalb der Hülle (20) im Bereich des Ventils (28) vorgesehen wird.

8. Verfahren nach einem der vorhergehenden Ansprüche, **dadurch gekennzeichnet, dass** der erste Druckwert ein Unterdruck ist.

9. Verfahren nach einem der vorhergehenden Ansprüche, **dadurch gekennzeichnet, dass** der zweite Druckwert der Druck der Außenumgebung ist.

10. Vorrichtung zur Durchführung des Verfahrens zum Tränken eines Auskleidungsmoduls (10, 100) nach einem der Ansprüche 1 bis 9, **gekennzeichnet durch** einen Bausatz umfassend eine Hülle (20, 200), eine Einfüllhilfe (30), ein Abdichtmittel (50) und ein Absperrmittel (40).

11. Vorrichtung nach Anspruch 10, **dadurch gekennzeichnet, dass** die Hülle (20) eine Öffnung zum Einbringen wenigstens eines Abschnittes des Auskleidungsmoduls (10, 100) in die Hülle (20, 200) umfasst.

12. Vorrichtung nach einem der Ansprüche 10 oder 11, **dadurch gekennzeichnet, dass** die Hülle (20, 200) ein Ventil zum Absaugen von Luft aufweist.

13. Vorrichtung nach einem der Ansprüche 10 bis 12, **dadurch gekennzeichnet, dass** die Einfüllhilfe (30) einen Einfüllstutzen, insbesondere in Form eines Hohlkörpers, umfasst.

14. Vorrichtung nach einem der Ansprüche 10 bis 13, **dadurch gekennzeichnet, dass** das Abdichtmittel (50) Klebeband und/oder das Absperrmittel (40) wenigstens eine Klammer (42, 44) umfasst.

15. Vorrichtung nach einem der Ansprüche 10 bis 14, **dadurch gekennzeichnet, dass** der Bausatz ein Schutzelement (70) zum Schutz des Ventils (28) vor dem Harz umfasst.

16. Vorrichtung nach Anspruch 15, **dadurch gekennzeichnet, dass** das Schutzelement (70) aus einem Gewebe, vorzugsweise aus einem Filz, besteht.
